# EUROPEAN PATENT SPECIFICATION

(11) **EP 2 479 145 B1**
(45) Date of publication and mention of the grant of the patent: **02.10.2013**
(21) Application number: 12151665.2
(22) Date of filing: 19.01.2012
(51) Int. Cl.: C02F 1/08, C02F 1/38, C02F 101/16

(54) **Process for ammonia recovery from urban and/or industrial waste**
Verfahren zum Wiedergewinnen der Ammonia aus Städtische und/oder Industrielle Abfälle
Procédé pour la recuperation de l'ammoniac des déchets urbains et/ou industriels

(30) Priority: 21.01.2011 IT MI20110058
(43) Date of publication of application: 25.07.2012
(73) Proprietor: AMBIENTE E NUTRIZIONE S.r.l., 20089 Rozzano (MI) (IT)
(72) Inventor: Cerea, Giuseppina, 20089 Rozzano (Milano) (IT)
(74) Representative: Ferreccio, Rinaldo

(56) References cited:
- GB-A- 2 383 034

## Description

### Field of application

In its most general aspect, the present invention relates to a process for the recovery of the ammonia generated from civil and/or industrial waste.

In particular, the invention relates to a process for the recovery of the ammonia generated from the anaerobic fermentation of civil and/or industrial waste, to be reused in processes for energy production.

Even more particularly, the present invention relates to a process of the above type, wherein ammonia is recovered from an essentially liquid flow coming from an anaerobic fermentation step of said civil and/or industrial waste.

Said civil and/or industrial waste indicates therefore any waste comprising organic substances which are capable to ferment in an anaerobic way, for example municipal solid waste, industrial waste of different types, biomass.

The term biomass as used herein indicates civil and/or industrial waste products, of plant and/or animal nature, such as sewage sludge, organic waste, animal excrements, for example dung and poultry droppings, agricultural and food waste, among which cut maize and sorghum stalk, and the like.

Therefore, said essentially liquid flow, hereafter also indicated with waste flow, can be a leachate flow directly obtained from a landfill, for example of municipal solid waste, or it can be an essentially liquid flow obtained following a digestate solid/liquid separation, i.e. obtained from the semiliquid fraction coming from an anaerobic fermentation step of the biomass used in biogas production.

### Prior art

It is known that ammonia is used in several industrial fields, for example in the production of fertilizers, explosives, plastic materials and synthetic fibers, in the paper industry, as a solvent, only to mention some uses.

Therefore, the production of ammonia has always been of great interest, and it used to be considered in the past as an indicator of the development of the chemical industry of a country.

It is also known that ammonia is presently considered as a dangerous pollutant because of the various harmful effects which can derive from the uncontrolled dumping thereof in the environment.

For example, ammonia poured in the atmosphere can bring about an increase in the fine particulate (>PM_{2.5}) following reaction thereof with air nitrogen oxides (NOₓ), with ensuing health hazard.

Moreover, ammonia undergoes nitrification and denitrification processes with generation of nitrous oxide, a gas having a strong greenhouse effect.

Further, ammonia plays an important role in acidification and eutrophication processes, with subsequent environmental damages, both of soil and water.

It is therefore necessary to both have such large quantities of ammonia as to meet the industrial demand thereof, and to limit the environmental pollution due to ammonia, particularly deriving from the ammonia discharge in the atmosphere, water and soil.

### Summary of the invention

The present invention aims at meeting the above requirements by means of an economically advantageous, effective and safe process for the recovery of the ammonia generated from civil and/or industrial waste, such as for example animal excrements, organic fraction of municipal solid waste, sewage sludge, agricultural and food waste and the like, to be reused in the chemical industry and/or energy production field.

Said civil and/or industrial waste thus comprise waste intended for disposal, for example the municipal solid waste of a landfill, or waste intended for recovery or recycling, for example the biomass used for biogas production.

In practice, thanks to the present invention, the ammonia which is present in an essentially liquid waste flow is recovered, such an essentially liquid waste being the leachate of a landfill of municipal solid waste, or an essentially liquid flow obtained through the separation of the digestate originated from a biomass, generating upon anaerobic fermentation of said civil and/or industrial waste, or any other liquid waste containing ammonia, while considerably reducing the amount of ammonia in the waste flow itself, which can be therefore subsequently disposed in compliance with national and EU rules, while said recovered ammonia is made available for use in the chemical industry, for example for the production of fertilizers, and/or in energy production, as a fuel or a reagent to be added to the fuel, for example to control combustion emissions.

The present process comprises continuously feeding an essentially liquid waste flow, such as a leachate of a landfill of municipal solid waste or an essentially liquid fraction obtained from a digestate solid/liquid separation, comprising ammonia generated from the anaerobic fermentation of said municipal solid waste or of a biomass generating said digestate, into a turbo-stripper comprising a cylindrical tubular body closed at its opposite ends by end plates, equipped with inlet and outlet openings, a heating jacket to bring the inner wall of the cylindrical tubular body to a predetermined temperature, a bladed rotor, coaxial and internal to the cylindrical tubular body where it is rotated at a peripheral speed comprised between 15 and 40 m/s, so as to disperse said waste flow comprising ammonia in a flow of particles comprising ammonia.
centrifuging said particles comprising ammonia against the inner wall of the turbo-stripper heated at a temperature comprised between 60°C and 250°C, preferably of 85°C, with formation of a highly turbulent, dynamic, thin tubular fluid layer, which advances substantially in contact with said inner wall of the turbo-stripper towards said outlet opening;
continuously discharging from said turbo-stripper a stripped waste flow comprising a liquid fraction essentially free, or with a reduced amount, of ammonia, and an ammonia rich gaseous fraction;
feeding said stripped waste flow into a liquid/gas separation unit, obtaining an ammonia rich gaseous flow and a liquid flow essentially free, or with a reduced amount, of ammonia.

In substance, advantageously, from an essentially liquid waste flow made of landfill leachate generated from the anaerobic fermentation of the organic fraction of municipal solid waste, or from an essentially liquid flow obtained by centrifuging or filtering the semiliquid fraction generated from an anaerobic fermentation step of biomass used for biogas production, i.e. said digestate, which, as a function of its origin, can contain up to 10% by weight of ammonia, generally between 1% and 10% by weight, and more generally between 5% and 8% by weight in the case of leachate, and between 2% and 7% by weight in the case of a liquid originated from a digestate, a liquid product, i.e. said liquid flow free, or with a reduced amount, of ammonia, is obtained according to the invention, which can be discharged into the environment in compliance with the rules regulating urban and industrial disposals, while said ammonia rich gaseous flow is a source of ammonia (recovered ammonia) which can be used in the production of corresponding ammonium salts, and/or as a fuel for energy production, and/or as a combustion-additive reagent in energy, particularly electric energy, production processes.

Therefore, according to a further aspect of the invention, said ammonia rich gaseous flow is sent to a neutralization step, for example in a Venturi scrubber or in a turbo-scrubber, wherein ammonia is reacted with sulphuric acid (H₂SO₄) or nitric acid (HNO₃), or solutions thereof, obtaining the corresponding ammonium sulphate or ammonium nitrate based salts;
and/or sent to a combustion step in a boiler burner, optionally pre-mixed with a fuel for said burner, wherein ammonia is used as a fuel-additive reagent to control combustion fumes, particularly to reduce the concentration of nitrogen oxides NOₓ in said fumes, and preferably as an additive reagent for a biomass or biogas used as a fuel in electric energy production, in the latter case preferably as an additive reagent for the biogas obtained through the same biomass anaerobic fermentation step wherefrom said digestate is obtained;
and/or sent to a combustion step as a fuel in an endothermic Otto engine, mixed with a comburent.

In practice, in said turbo-stripper an ammonia stripping or turbo-stripping step is performed, i.e. the transfer of the ammonia which is dissolved in said essentially liquid waste flow to a gaseous fraction of the waste flow that is generated in the turbo-stripper according to the present process.

The present invention has proved that the turbulent thin (film) layer conditions generated within the turbo-stripper, coupled with the physical features of ammonia and of the water solutions thereof, and with particular values of process parameters, allow the ammonia contained in the process waste flow to be totally, or almost totally, stripped.

Preferably, the residence time of the waste flow within the turbo-stripper is comprised between 30 seconds and five minutes.

Still preferably, said turbo-stripping step is carried out at a pH value comprised between 10 and 13, preferably 12.

Said pH value is obtained by feeding into the turbo-stripper a concentrated solution of sodium hydroxide (NaOH - caustic soda), or calcium hydroxyde (CaOH)₂ - hydrated lime), or potassium hydroxide (KOH - potash).

In other words, said turbo-stripping step is preferably carried out essentially simultaneously with a neutralization step of the process waste flow through the use of at least one of said hydroxides.

For this purpose, the cylindrical tubular body of the turbo-stripper is equipped with suitable nozzles allowing said concentrated hydroxide solution to be sprayed thereinside. Said nozzles, according to need, can be provided at the inlet opening of the process waste flow, or distributed in a radial pattern in the cylindrical tubular body and/or along the axis thereof, or they can even have a helicoidal distribution along the cylindrical tubular body of the turbo- stripper.

Moreover, it must be added that the same cylindrical tubular body of the turbo-stripper can comprise, according to need, several inlet openings and/or several outlet openings to feed the process waste flow and discharge the stripped waste flow respectively.

Still preferably said turbo-stripping step is carried out at a pressure value comprised between 1 and 0,05 atm.

Advantageously, said heating jacket of the turbo-stripper can be heated by means of steam, diathermic oil, resistor, hot water from the cooling of industrial engines, overheated water recovered from an industrial cycle.

The present invention also provides a plant to implement said process, essentially comprising a turbo-stripper of the above type and a liquid/gas separation unit arranged downstream of the turbo-stripper, wherein a unidirectional fluid communication is made from the turbo-stripper to the liquid/gas separation unit.

Preferably said liquid/gas separation unit consists of a hydrocyclone.

According to a further aspect of the invention, the present plant can further comprise at least one ammonia usage unit, arranged downstream of said liquid/gas separation unit and in unidirectional fluid communication therewith.

If more ammonia usage units are provided, they are arranged in parallel to each other so as to use the recovered ammonia for different uses, according to need.

In practice, one or more ammonia usage units can be provided between:
a first ammonia usage unit essentially comprising at least one Venturi scrubber or one turbo-scrubber whereinto said gaseous flow containing ammonia coming from the liquid/gas separation unit and a flow of sulphuric acid or nitric acid or solutions thereof are fed, to obtain the corresponding ammonium salts;
a second ammonia usage unit essentially comprising at least one boiler equipped with a burner whereinto said gaseous flow containing ammonia coming from the liquid/gas separation unit and a fuel flow are fed, wherein the recovered ammonia is used to control combustion fumes of said fuel.

In particular, the ammonia of the gaseous flow containing ammonia is used to reduce the nitrogen oxides in said fumes, and preferably to reduce the nitrogen oxides in fumes deriving from biomass or biogas combustion, in this latter case preferably biogas obtained from the anaerobic fermentation of the same biomass wherefrom said digestate is obtained.

In particular, when the fuel is biogas and the waste flow is originated from the digestate, a biomass digester is provided upstream of the turbo-stripper, and a solid/liquid separation unit is comprised therebetween, for example a centrifuge or a filtration system.

In detail, the solid/liquid separation unit is arranged downstream of the digester and upstream of the turbo-stripper, and an unidirectional fluid communication is established from the digester to the solid-liquid separation unit and from the latter to the turbo-stripper, moreover the digester is arranged in unidirectional fluid communication also with said second ammonia usage unit;
a third ammonia usage unit essentially comprising at least an endothermic Otto engine whereinto said gaseous flow containing ammonia coming from the liquid/gas separation unit and a comburent are fed, wherein ammonia is used as a fuel for electric energy production.

In practice, the present invention allows a source of ammonia to be made available, to be used in chemical industry and/or in the energy production field, which is advantageously generated and recovered from waste product, and in particular recovered from an essentially liquid waste flow generated from waste product which, still advantageously, is converted into a flow with a low amount of ammonia, thus into a waste product with a low environmental impact which can be disposed in compliance with national and international rules.

Moreover, it must be added that the recovered ammonia can be obtained with a high degree of purity, in particular when the turbo-stripping step is carried out with an hydroxide which allows to remove the possible presence of hydrogen sulphide (H₂S) and linear organic acids, which are present in the process waste flow and are originated from the anaerobic degradation of the organic component of municipal solid waste or biomass.

Ammonia with a high degree of purity is further advantageous for a plant of the above-described type, since it increases the duration of use for example of a boiler burner, or of an endothermic Otto engine, in particular of the head of such an engine, in which it is used as a combustion-additive reagent and as a fuel respectively.

Further advantages and features of this invention will be more apparent from the description of embodiments of a process according to the invention, made hereafter with reference to the attached drawings, given by way of illustrative and not limiting examples.

### Brief description of the drawings

Figure 1 schematically shows a plant for the recovery of the ammonia generated from civil and/or industrial waste according to the present invention, wherein the essential components of the invention are represented with unbroken lines and the components of alternative embodiments of the invention are represented with broken lines.
Figure 2 shows a particular of the plant of figure 1.
Figure 3 schematically shows the plant for the recovery of ammonia of figure 1, according to an alternative embodiment of the invention.

### Detailed description of the invention

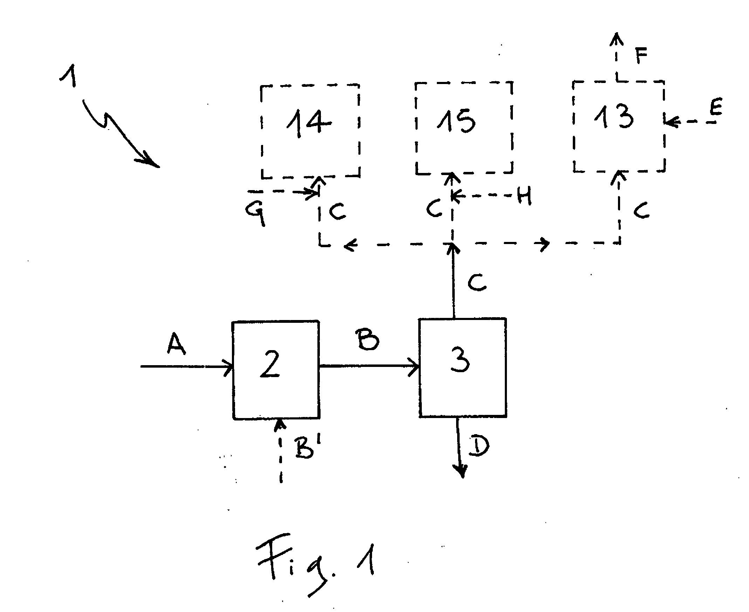

A process for the recovery of the ammonia generated from civil and/or industrial waste according to the present invention is described with reference to the example of figure 1, wherein a corresponding implementation plant globally indicated with 1 is represented.

In particular in plant 1 there is recovered the ammonia contained in an essentially liquid waste flow A, which consists of landfill leachate, comprising about 5% by weight of ammonia generated from the anaerobic fermentation of the organic component of municipal solid waste.

In detail, the plant 1 essentially comprises a turbo-stripper 2 whereinto the waste flow A is fed, and a liquid/gas separation unit 3 arranged downstream of the turbo-stripper 2, wherein a unidirectional fluid communication is made through a suitable duct from the turbo-stripper 2 to the liquid/gas separation unit 3.

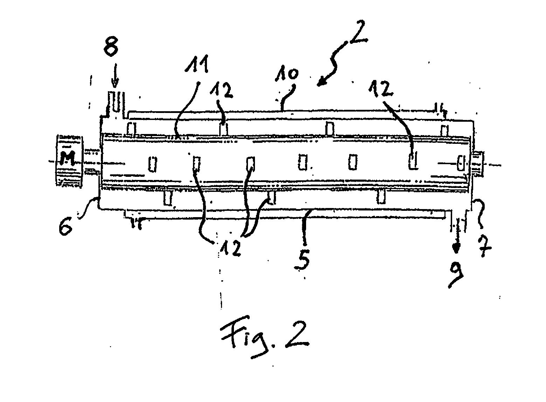

The turbo-stripper 2, shown in detail in the example of figure 2, essentially comprises a cylindrical tubular body 5 closed at the opposite ends by end plates 6 and 7 and having inlet (feeding) and outlet (discharge) openings 8 and 9 respectively, equipped with a heating jacket 10 to bring the inner wall of the cylindrical tubular body 5 to a predetermined temperature and with a bladed rotor 11, coaxial and internal to the cylindrical tubular body 5, where it is rotated, by means of an engine M, at a peripheral speed comprised between 15 and 40 m/s.

The bladed rotor 11 comprises a plurality of blades 12 helicoidally arranged and oriented so as to disperse the waste flow A comprising ammonia in a flow of particles comprising ammonia.

In particular, the particles comprising ammonia are centrifuged against the inner wall of the turbo-stripper 2 heated at a temperature of about 90°C, with formation of a highly tubulent, dynamic, thin tubular fluid layer, which advances substantially in contact with the inner wall of the turbo-stripper 2 towards the outlet opening 9.

In the turbo-stripper 2 a stripping, or turbo-stripping, step of the ammonia contained in the waste flow A is actually performed, with ammonia passing therefore from the liquid to a gaseous fraction which generates in the process flow, which is continuously discharged from the turbo-stripper 2 as a stripped waste flow B.

In particular, the stripped waste flow B consists of a liquid fraction essentially free, or with a reduced amount, of ammonia, and of said ammonia-rich gaseous fraction.

The stripping step is preferably carried out at a pH value of about 12, obtained by feeding into the turbo-stripper 2 a concentrated solution of sodium hydroxide, or calcium hydroxide or potassium hydroxide, indicated with flow B'.

Moreover, the stripping step is carried out at a pressure value preferably of 0,9 Atm.

Further, the stripping step is preferably carried out in a time interval of about 2 minutes.

The stripped waste flow B discharged from the turbo-stripper 2 is then fed into said liquid/gas separation unit 3, which can be any unit suitable to separate, in a process flow, a liquid phase from a gaseous phase, and which preferably essentially comprises a hydrocyclone.

A gaseous flow containing ammonia C and a liquid flow free, or with a reduced amount, of ammonia, indicated with D, are then discharged from the liquid/gas separation unit 3.

The gaseous flow containing ammonia C is in practice a source of ammonia, advantageously generated and recovered from waste, such as municipal solid waste, which, according to a further aspect of the invention, is usefully utilized in chemical industry and/or in energy, particularly electrical energy, production.

To this purpose, the plant according to the present invention comprises one or more ammonia usage units arranged downstream of the liquid/gas separation unit, whereinto the gaseous flow containing ammonia C is sent.

In particular, the gaseous flow containing ammonia C can be fed into a first ammonia usage unit 13, essentially comprising a Venturi scrubber or a turbo-scrubber, whereinto sulphuric acid or nitric acid, or solutions thereof, are also fed, through a flow indicated with E.

In substance, in the first ammonia usage unit 13 a first usage step of the recovered ammonia is performed, which consists in reacting the ammonia contained in the gaseous flow comprising ammonia C with said acids to obtain the corresponding ammonium sulphate or ammonium nitrate based salts, indicated with F.

The Venturi scrubber is a known device and therefore here not described in detail, essentially comprising a scrubber or washing tower, equipped with a Venturi pipe, whereinto the gaseous flow containing ammonia C and an absorption or neutralization liquid flow comprising the sulphuric or nitric acid, i.e. said flow E, are introduced.

The turbo-scrubber is substantially a device quite similar to the turbo-stripper 2 previously shown, the description of which is referred to, whereinto the gaseous flow containing ammonia C and an absorption or neutralization liquid flow comprising the sulphuric acid or the nitric acid, i.e. said flow E, are fed.

Alternatively or in parallel to said first ammonia usage unit, the present plant can also comprise a second ammonia usage unit 14, comprising at least a boiler equipped with a burner.

In this case, the gaseous flow containing ammonia C is fed into the burner of the boiler together with a fuel flow G, optionally pre-mixed with the fuel, and the ammonia contained in this flow is used as a combustion additive, in particular to reduce the concentration of nitrogen oxides NOₓ in combustion fumes.

In substance, in the second ammonia usage unit 14 a second usage step is performed, which consists in reacting the recovered ammonia with the nitrogen oxides generated by the combustion of the fuel which are then reduced to elementary nitrogen.

Preferably, the fuel consists of biogas or biomass.

Alternatively, or in parallel to the first, second or both ammonia usage units, the present plant can also comprise a third ammonia usage unit 15, comprising an endothermic Otto engine.

In this case, the gaseous flow containing ammonia C is fed into the third ammonia usage unit as a fuel of the endothermic Otto engine, optionally pre-mixed with an oxidizing flow indicated with H.

In substance, a third usage step of the recovered ammonia is performed in the third ammonia usage unit 15, which consists in using the ammonia directly as a fuel of an endothermic Otto engine.

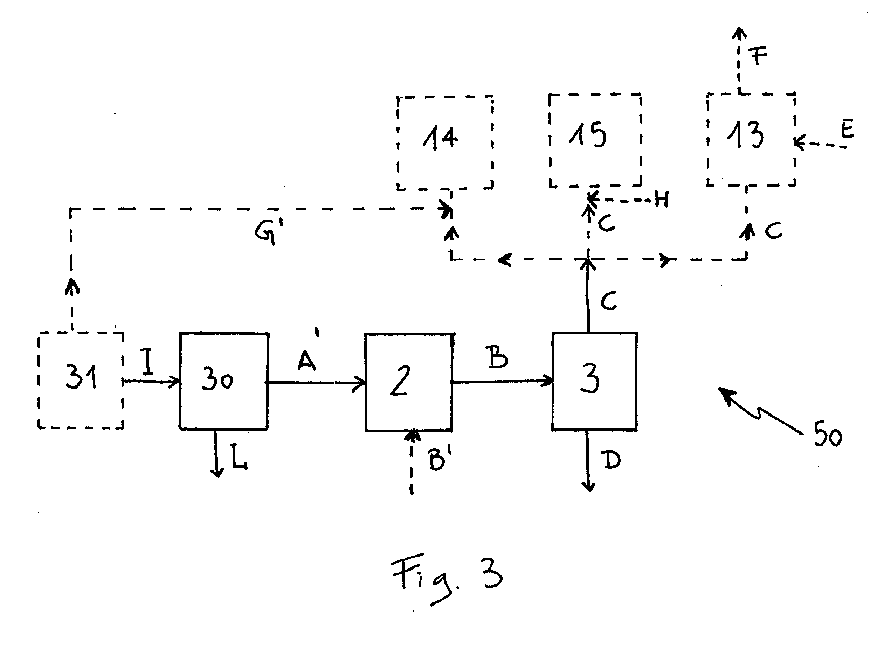

With reference to figure 3 an alternative embodiment of the plant of figure 1 is shown, wherein units that are structurally and functionally corresponding are indicated with the same reference numbers previously used.

In particular, the example of figure 3 shows a plant globally indicated with 50, wherein ammonia is recovered from an essentially liquid waste flow A', obtained by liquid/solid separation of the semiliquid fraction (digestate) generated from biomass anaerobic fermentation.

In this case, the present plant comprises a liquid/solid separation unit indicated with 30, arranged upstream of the turbo-stripper 2, whereinto a digestate flow I is fed, and wherefrom said essentially liquid waste flow A' containing ammonia, and an essentially solid digestate fraction L, are discharged.

In detail, the waste flow A', which comprises about 3-5% by weight of ammonia, undergoes the same process steps previously shown with reference to the example of figures 1 and 2, the description of which is referred to, plants 1 and 50 essentially differing by the presence of said liquid/solid separation unit 30 and optionally by the presence of a biomass digester.

In particular, according to a further aspect of the invention, upstream of the liquid/solid separation unit 30 there can be also advantageously provided said digester, indicated with 31, wherefrom said digestate flow I is obtained, which digester is advantageously arranged in fluid communication with said second ammonia usage unit 14.

In substance, in this case, the ammonia recovered through the present process is used as an additive in biogas combustion, in particular a biogas flow G', advantageously obtained from the same anaerobic fermentation step undergone by the biomass in the digester 31.

The advantages of the present invention, already pointed out during the present description, consist in that a source of ammonia to be used in the industry is made available in an economically advantageous, simple and safe way, and in that the ammonia made available is recovered from waste material.

A further advantage lies in that, thanks to the present invention, a source of ammonia with a high degree of purity is obtained.

A further advantage lies in that the invention allows to reduce the content of ammonia generated in a waste material following anaerobic fermentation, which content can be therefore easily disposed in compliance with the rules regulating industrial waste.

In order to meet contingent and specific requirements, a skilled person in the art could bring several changes to the above-described invention in the different embodiments thereof, all falling however within the scope of protection of the invention, as defined by the following claims.

## Claims

1. A process for the recovery of ammonia generated from civil and/or industrial waste comprising the steps of:
- feeding an essentially liquid waste flow (A; A') comprising an amount of ammonia between 1% and 10% by weight in a turbo-stripper (2) comprising a cylindrical tubular body (5) closed at its opposite ends by end plates (6, 7), equipped with inlet and outlet openings (8, 9), a heating jacket (10) for bringing the inner wall of the cylindrical tubular body (5) to a predetermined temperature, a bladed rotor (11), internal and coaxial with the cylindrical tubular body where it is rotated at a peripherical speed comprised between 15 and 40 m/s, so as to disperse said waste flow (A; A') into a flow of particles comprising ammonia;
- centrifuging said particles comprising ammonia against the inner wall of the turbo-stripper (2) heated to a temperature comprised between 60°C and 250°C, preferably of 85°C, with formation of a thin, dynamic, highly turbulent tubular fluid layer, which advances substantially in contact with said inner wall of the turbo-stripper (2) towards said outlet opening (9);
- discharging from said turbo-stripper (2) a stripped waste flow (B) comprising a liquid fraction essentially free, or with a reduced amount, of ammonia, and an ammonia rich gaseous fraction;
- feeding said stripped waste flow (B) into a liquid/gas separation unit (3);
- discharging from said liquid/gas separation unit (3) an ammonia rich gaseous flow (C) and a liquid flow (D) essentially free, or with a reduced amount, of ammonia.

2. The process according to claim 1, wherein a concentrated solution of sodium hydroxide, calcium hydroxide or potassium hydroxide is fed into said turbo-stripper (2), in such an amount as to bring the pH of said waste flow to a value of between 10 and 13, preferably about 12.

3. The process according to claim 1 or 2, wherein the residence time of said waste flow in said turbo-stripper (2) is comprised between 30 seconds and 5 minutes, and preferably is about 2 minutes.

4. The process according to any one of the previous claims, wherein the internal pressure of said turbo-stripper (2) is at a value comprised between 0.05 and 1 atm, and preferably is about 0.9 atm.

5. The process according to any one of the previous claims, further comprising the steps of feeding said ammonia rich gaseous flow (C) and a flow comprising sulphuric acid or nitric acid (E) into a first ammonia usage unit (13), and reacting said flows, thus obtaining ammonium sulphate or ammonium nitrate based salts.

6. The process according to any one of the previous claims, further comprising the steps of feeding said ammonia rich gaseous flow (C) and a fuel (G) into a second ammonia usage unit (14) comprising a burner, and reacting the ammonia contained in said ammonia rich gaseous flow (C) with the nitrogen oxides generated by the combustion of said fuel.

7. The process according to claim 6, wherein said ammonia rich gaseous flow (C) is pre-mixed with said fuel (G) before said combustion.

8. The process according to claims 6 or 7, wherein said fuel consists of biogas or biomass.

9. The process according to any one of the previous claims, further comprising the steps of feeding said ammonia rich gaseous flow (C) and an oxidizing flow (H) into a third ammonia usage unit (15) comprising a endothermic Otto engine, and reacting said flows react to feed said engine.

10. The process according to any one of the previous claims, wherein said waste flow is a municipal solid waste landfill leachate or a waste flow originated from digestate obtained by biomass anaerobic fermentation or any other liquid waste flow containing ammonia.

11. The process according to claim 10, wherein said waste flow (A') is obtained by a liquid/solid separation step of said digestate (I).

12. The process according to claim 11, wherein said fuel fed into said second ammonia usage unit (14) is a biogas flow (G') obtained by said biomass anaerobic fermentation step.

13. A plant for recovering ammonia generated from civil and / or industrial waste comprising:
- a turbo-stripper (2) comprising a cylindrical tubular body (5) closed at its opposite ends by end plates (6, 7), equipped with inlet and outlet openings (8, 9), a heating jacket (10) for bringing the inner wall of the cylindrical tubular body (5) to a predetermined temperature, a bladed rotor (11), internal and coaxial with the cylindrical tubular body (5) which is apt to rotate at a peripherical speed comprised between 15 and 40 m/s;
- a liquid/gas separation unit (3) downstream of said turbo-stripper (2) and in fluid communication therewith.

14. The plant according to claim 13, wherein said liquid/gas separation unit (3) consists of a hydrocyclone.

15. The plant according to claim 13 or 14, further comprising at least one ammonia usage unit (13, 14, 15) downstream of said liquid/gas separation unit (3) and in fluid communication therewith, said at least one ammonia usage unit comprising a Venturi scrubber, a turbo-scrubber, a boiler equipped with a burner or an endothermic Otto engine.

16. The plant according to claim 15, wherein two or more ammonia usage units are disposed in series.

17. The plant according any one of claims 13-16, further comprising a liquid/solid separation unit (30) upstream of said turbo-stripper (2) and in unidirectional fluid communication therewith.

18. The plant according to claim 17, wherein said liquid/solid separation unit (30) comprises a centrifuge or a filtration system.

19. The plant according to claim 17 or 18, further comprising a digester (31) upstream of said liquid/solid separation unit (30) and in fluid communication with said liquid/solid separation unit (30) and with said at least one ammonia usage unit (14) comprising a boiler equipped with a burner.

## Patentansprüche

1. Verfahren zur Gewinnung von Ammoniak, das von zivilem und/oder industriellem Abfall erzeugt worden ist, umfassend die Schritte:
- Einspeisen eines im Wesentlichen flüssigen Abfallstroms (A; A') umfassend einen Ammoniakanteil von zwischen 1 Gew.-% und 10 Gew.-% in einen Turbo-Abscheider (*turbo stripper*) (2) umfassend einen zylindrischen, tubulären Körper (5), der an seinen gegenüberliegenden Enden mit Endplatten (6, 7) verschlossen ist, der mit Einlass- und Auslassöffnungen (8, 9), einem Heizmantel (10), um die innere Wand des zylindrischen, tubulären Körpers auf eine vorbestimmte Temperatur zu bringen, einem Rotor mit Rotorblättern (11), der zum zylindrischen, tubulären Körper (5) innen und koaxial liegt, wo er bei einer peripheren Geschwindigkeit zwischen 15 und 40 m/s rotiert, ausgestattet ist, so dass sich der Abfallstrom (A; A') in einen Strom von Ammoniak-umfassenden Partikeln verteilt;
- Zentrifugieren der Ammoniak-umfassenden Partikel gegen die innere Wand des Turbo-Abscheiders (2), der auf eine Temperatur zwischen 60°C und 250°C, vorzugsweise 85°C, aufgeheizt ist, mit Bildung einer dünnen, dynamischen, höchst verwirbelten tubulären, Fluidschicht, die im Wesentlichen in Kontakt mit der inneren Wand des Turbo-Abscheiders (2) in Richtung der Auslassöffnung (9) voranschreitet;
- Entfernen eines zerlegten Abfallstroms (B) umfassend eine flüssige Fraktion, die im Wesentlichen frei von oder einen verminderten Anteil an Ammoniak enthält, und eine ammoniakreiche gasförmige Fraktion aus dem Turbo-Abscheider (2);
- Einspeisen des zerlegten (stripped) Abfallstroms (B) in eine Flüssig/Gas-Trenneinheit (3);
- Entfernen eines ammoniakreichen gasförmigen Stroms (C) und eines flüssigen Stroms (D), der im Wesentlichen frei von oder einen verminderten Anteil an Ammoniak enthält, aus der Flüssig/Gas-Trenneinheit (3).

2. Verfahren nach Anspruch 1, wobei eine konzentrierte Lösung von Natriumhydroxid, Calciumhydroxid oder Kaliumhydroxid in einer solchen Menge in den Turbo-Abscheider (2) eingespeist wird, dass der pH-Wert des Abfallstroms auf einen Wert zwischen 10 und 13, vorzugsweise 12, gebracht wird.

3. Verfahren nach Anspruch 1 oder 2, wobei die Verweildauer des Abfallstroms im Turbo-Abscheider (2) bei zwischen 30 Sekunden und 5 Minuten, vorzugsweise bei ungefähr 2 Minuten liegt.

4. Verfahren nach irgendeinem der vorangehenden Ansprüche, wobei der Innendruck des Turbo-Abscheiders (2) bei einem Wert zwischen 0,05 und 1 atm, und vorzugsweise bei ungefähr 0,9 atm liegt.

5. Verfahren nach irgendeinem der vorangehenden Ansprüche, weiterhin einen Schritt des Einspeisens des ammoniakreichen gasförmigen Stroms (C) und eines Stroms umfassend Schwefelsäure oder Salpetersäure (E) in eine Ammoniak-Verwendungseinheit (13), und Reagierenlassen des Stroms, um so Ammoniumsulfat- oder Ammoniumnitrat-basierte Salze zu erhalten.

6. Verfahren nach irgendeinem der vorangehenden Ansprüche, weiterhin einen Schritt des Einspeisens des ammoniakreichen gasförmigen Stroms (C) und eines Brennstoffes (G) in eine zweite Ammoniak-Verwendungseinheit (14) umfassend einen Brenner, und Reagierenlassen des im ammoniakreichen gasförmigen Strom (C) enthaltenen Ammoniaks mit den durch die Verbrennung des Brennstoffs erzeugten Stickoxiden.

7. Verfahren nach Anspruch 6, wobei der ammoniakreiche gasförmige Strom (C) mit dem Brennstoff (G) vor der Verbrennung vorgemischt ist.

8. Verfahren nach Anspruch 6 oder 7, wobei der Brennstoff aus Biogas oder Biomasse besteht.

9. Verfahren nach irgendeinem der vorangehenden Ansprüche, weiterhin einen Schritt des Einspeisens des ammoniakreichen gasförmigen Stroms (C) und eines oxidierenden Stroms (H) in eine dritte Ammoniak-Verwendungseinheit (15) umfassend einen endothermen Ottomotor, und Reagierenlassen der Ströme, die reagieren, um den Motor anzutreiben.

10. Verfahren nach irgendeinem der vorangehenden Ansprüche, wobei der Abfallstrom ein kommunales Festabfalldeponiesickerwasser oder ein Abfallstrom, der aus Gärrest, der aus anaerober Fermentation von Biomasse erhalten wird, oder irgendein anderer flüssiger, Ammoniak-enthaltender Abfallstrom ist.

11. Verfahren nach Anspruch 10, wobei der Abfallstrom (A') mittels eines Flüssig/Fest-Trennschritts des Gärrests (I) erhalten wird.

12. Verfahren nach Anspruch 11, wobei der in die zweite Ammoniak-Verwendungseinheit (14) eingespeiste Brennstoff ein Biogasstrom (G') ist, der durch den anaeroben Fermentationsschritt von Biomasse erhalten wird.

13. Anlage zur Gewinnung von Ammoniak, das von zivilem und/oder industriellem Abfall erzeugt worden ist, umfassend:
- einen Turbo-Abscheider (2) umfassend einen zylindrischen, tubulären Körper (5), der an seinen gegenüberliegenden Enden mit Endplatten (6, 7) verschlossen ist, der mit Einlass- und Auslassöffnungen (8, 9), einem Heizmantel (10), um die innere Wand des zylindrischen, tubulären Körpers (5) auf eine vorbestimmte Temperatur zu bringen, einem Rotor mit Rotorblättern (11), der zum zylindrischen, tubulären Körper (5) innen und koaxial liegt, der dafür geeignet ist, bei einer peripheren Geschwindigkeit, die zwischen 15 und 40 m/s liegt, zu rotieren, ausgestattet ist;
- eine Flüssig/Gas-Trenneinheit (3), die stromabwärts vom Turbo-Abscheider (2) liegt und mit diesem in Flüssigverbindung steht.

14. Anlage nach Anspruch 13, wobei die Flüssig/Gas-Trenneinheit (3) aus einem Hydrozyklon besteht.

15. Anlage nach Anspruch 13 oder 14, weiterhin mindestens eine Ammoniak-Verwendungseinheit (13, 14, 15) umfassend, die stromabwärts von der Flüssig/Gas-Trennungseinheit (3) liegt und mit dieser in Fluidverbindung steht, wobei die mindestens eine Ammoniak-Verwendungseinheit einen Venturi-Wäscher, einen Turbo-Wäscher, einen Heizkessel, der mit einem Brenner oder einem endothermen Ottomotor ausgestattet ist, umfasst.

16. Anlage nach Anspruch 15, wobei zwei oder mehr Ammoniak-Verwendungseinheiten in Reihe geschaltet sind.

17. Anlage nach irgendeinem der Ansprüche 13-16, weiterhin eine Flüssig/Fest-Trenneinheit (30) umfassend, die stromaufwärts vom Turbo-Abscheider (2) liegt und mit diesem in einer unidirektionalen Fluidverbindung steht.

18. Anlage nach Anspruch 17, wobei die Flüssig/Fest-Trenneinheit (30) eine Zentrifuge oder ein Filtrationssystem umfasst.

19. Anlage nach Anspruch 17 oder 18, weiterhin einen Fermenter (31) umfassend, der stromaufwärts von der Flüssig/Fest-Trenneinheit (30) liegt und mit dieser Flüssig/Fest-Trenneinheit (30) und mit mindestens einer Ammoniak-Verwendungseinheit (14), die einen Heizkessel, der mit einem Brenner ausgestattet ist, umfasst, in Fluidverbindung steht.

## Revendications

1. Procédé pour la récupération de l'ammoniac produit par des déchets urbains et/ou industriels comprenant les étapes de :
- injection d'un flux de déchets (A ; A') essentiellement liquide comprenant une quantité d'ammoniac comprise entre 1% et 10% en poids dans un turbo-separateur comprenant un corps tubulaire cylindrique (5) fermé à ses extrémités opposées par des plaques d'extrémité (6, 7) et pourvu d'ouvertures d'entrée et de sortie (8, 9), une enveloppe chauffante (10) pour porter la paroi interne du corps tubulaire cylindrique (5) à une température prédéterminée, un rotor à aubes (11) interne coaxial avec le corps tubulaire cylindrique qui est mis en rotation à une vitesse périphérique comprise entre 15 et 40 m/s, de manière à disperser ledit flux de déchets (A ; A') en un flux de particules comprenant de l'ammoniac ;
- centrifugation desdites particules comprenant de l'ammoniac contre la paroi interne du turbo-séparateur (2) chauffée à une température comprise entre 60°C et 250°C, préférablement de 85°C, avec la formation d'une fine et dynamique couche fluide tubulaire hautement turbulente, qui progresse substantiellement au contact de ladite paroi interne du turbo-séparateur (2) vers ladite ouverture de sortie (9) ;
- évacuation dudit turbo-séparateur (2) d'un flux de déchets (B) séparés comprenant une fraction liquide essentiellement exempte, ou avec une quantité réduite d'ammoniac, et une fraction gazeuse riche en ammoniac ;
- injection dudit flux de déchets (B) séparés dans une unité de séparation liquide/gaz (3) ;
- évacuation de ladite unité de séparation liquide/gaz (3) d'un flux gazeux (C) riche en ammoniac et d'un flux liquide (D) essentiellement exempt, ou avec une quantité réduite d'ammoniac.

2. Procédé selon la revendication 1, dans lequel une solution concentrée d'hydroxyde de sodium, d'hydroxyde de calcium ou d'hydroxyde de potassium est injectée dans ledit turbo-séparateur (2), en quantité telle que le pH dudit flux de déchets atteint une valeur comprise entre 10 et 13, préférablement de 12 environ.

3. Procédé selon la revendication 1 ou 2, dans lequel le temps de résidence dudit flux de déchets dans ledit turbo-séparateur (2) est compris entre 30 secondes et 5 minutes, et préférablement d'environ 2 minutes.

4. Procédé selon l'une des revendications précédentes, dans lequel la pression interne dudit turbo-séparateur (2) présente une valeur comprise entre 0,05 et 1 atm, et préférablement d'environ 0,9 atm.

5. Procédé selon l'une des revendications précédentes, comprenant en outre les étapes d'injection dudit flux gazeux (C) riche en ammoniac et d'un flux comprenant de l'acide sulfurique ou de l'acide nitrique (E) dans une première unité d'exploitation de l'ammoniac (13), et de réaction desdits flux, obtenant ainsi des sels à base de sulfate d'ammonium ou à base de nitrate d'ammonium.

6. Procédé selon l'une des revendications précédentes, comprenant en outre les étapes d'injection dudit flux gazeux (C) riche en ammoniac et d'un carburant (G) dans une seconde unité d'exploitation de l'ammoniac (14) comprenant un brûleur, et de réaction de l'ammoniac contenu dans ledit flux gazeux (C) riche en ammoniac avec les oxydes d'azote générés par la combustion dudit carburant.

7. Procédé selon la revendication 6, dans lequel ledit flux gazeux (C) riche en ammoniac est pré-mélangé avec ledit carburant (G) avant ladite combustion.

8. Procédé selon les revendications 6 ou 7, dans lequel ledit carburant est constitué de biogaz ou de biomasse.

9. Procédé selon l'une des revendications précédentes, comprenant en outre les étapes d'injection dudit flux gazeux (C) riche en ammoniac et d'un flux oxydant (H) dans une troisième unité d'exploitation d'ammoniac (15) comprenant un moteur Otto endothermique, et de réaction desdits flux pour alimenter ledit moteur.

10. Procédé selon l'une des revendications précédentes, dans lequel ledit flux de déchets est un lixiviat de décharge municipal ou un flux de déchets provenant du digestat obtenu par fermentation anaérobie de biomasse ou tout autre flux de déchets liquide contenant de l'ammoniac.

11. Procédé selon la revendication 10, dans lequel ledit flux de déchets (A') est obtenu par une étape de séparation liquide/solide dudit digestat (I).

12. Procédé selon la revendication 11, dans lequel ledit carburant injecté dans ladite seconde unité d'exploitation de l'ammoniac (14) est un flux de biogaz (G') obtenu par ladite étape de fermentation anaérobie de biomasse.

13. Usine pour récupérer l'ammoniac produit par des déchets urbains et/ou industriels comprenant :
- un turbo-séparateur (2) comprenant un corps tubulaire cylindrique (5) fermé à ses extrémités opposées par des plaques d'extrémité (6,7) et pourvu d'ouvertures d'entrée et de sortie (8, 9), une enveloppe chauffante (10) pour porter la paroi interne du corps tubulaire cylindrique (5) à une température prédéterminée, un rotor à aubes (11) interne coaxial avec le corps tubulaire cylindrique (5) qui est apte à tourner à une vitesse périphérique comprise entre 15 et 40 m/s ;
- une unité de séparation liquide/gaz (3) en aval dudit turbo-séparateur (2) et en communication fluide avec celui-ci.

14. Usine selon la revendication 13, dans laquelle l'unité de séparation liquide/gaz (3) consiste en un hydrocyclone.

15. Usine selon la revendication 13 ou 14, comprenant en outre au moins une unité d'exploitation de l'ammoniac (13, 14, 15) en aval de ladite unité de séparation liquide/gaz et en communication fluide avec celle-ci, ladite au moins une unité d'exploitation de l'ammoniac comprenant un épurateur Venturi, un turbo-épurateur, une chaudière équipée d'un brûleur ou un moteur Otto endothermique.

16. Usine selon la revendication 15, dans laquelle deux ou plusieurs unités d'exploitation de l'ammoniac sont disposées en série.

17. Usine selon l'une des revendications 13 à 16, comprenant en outre une unité de séparation liquide/solide (30) en amont dudit turbo-séparateur (2) et en communication fluide unidirectionnelle avec celui-ci.

18. Usine selon la revendication 17, dans laquelle l'unité de séparation liquide/solide (30) comprend un système de centrifugation ou de filtration.

19. Usine selon la revendication 17 ou 18, comprenant en outre un digesteur (31) en amont de ladite unité de séparation liquide/solide (30) et en communication fluide avec ladite unité de séparation liquide/solide (30) et avec ladite au moins une unité d'exploitation de l'ammoniac (14) comprenant une chaudière équipée d'un brûleur.
